# EUROPEAN PATENT SPECIFICATION

(11) **EP 1 051 033 B1**
(45) Date of publication and mention of the grant of the patent: **12.03.2008**
(21) Application number: 00401097.1
(22) Date of filing: 19.04.2000
(51) Int. Cl.: H04N 5/44, H04N 5/46

(54) **Process for detecting black bars in a video image**
Verfahren zur Detektion von schwarzen Strichen innerhalb eines Videobildes
Procédé de détection de bandes noires dans une image vidéo

(30) Priority: 06.05.1999 FR 9905777
(43) Date of publication of application: 08.11.2000
(73) Proprietor: THOMSON multimedia, 92100 Boulogne Billancourt (FR)
(72) Inventor: Joanblanq, Anne-Françoise, 92100 Boulogne-Billancourt (FR)
(74) Representative: Ruellan-Lemonnier, Brigitte

(56) References cited:
- EP-A- 0 716 542
- EP-A- 0 800 311
- EP-A- 0 837 602
- EP-A- 0 913 994
- WO-A-94/19911
- WO-A-96/13936

## Description

The invention relates to a process for automatically detecting horizontal black bands, for example for implementing automatic zoom for video images in the 4/3 format on 16/9 screens.

Processes exist for automatically detecting so-called "letterbox" formats comprising black horizontal bars at the top and bottom of the television image. These processes are generally based on a measurement of the video levels over the first few and last few lines of the video image. It is as a function of the luminance levels averaged over these first few lines and over these last few lines that the "letterbox" format is detected. Such known processes are described in EP-A-0 800 311 and EP-A-0 716 542.

These processes are however not very reliable since they depend on luminance settings, on the signal/noise ratio, on the insertion of logos into the black bands, etc.

The purpose of the invention is to alleviate the aforesaid drawbacks.

Its subject is a process as defined in the appended claims.

According to a particular embodiment, the value relating to a maximum number of occurrences, for a line, is the maximum number of occurrences (Maxzone_Principal i) of the points of the complete line or of a line portion.

According to another embodiment, the value relating to a maximum number of occurrences, for a line, is the sum of the first, second and third greatest occurrences (Maxzone i) of the points of the complete line or of a line portion.

According to other embodiments, the threshold is also dependent on the signal-to-noise ratio of the image. It can be a percentage of the average, this percentage possibly being dependent on the value of the average, over these lines, calculated for occurrences corresponding to the points of a complete line (Z1).

According to a particular embodiment, the value relating to the maximum number of occurrences, for a line, is calculated for all the points of the line (Z1).

According to another embodiment, the image is split up into vertical zones (Z2, Z3, Z4), and the value relating to the number of occurrences, for a line, is calculated for only those points of the line portion corresponding to this zone. The comparison can be performed for various zones.

According to a particular embodiment, the threshold relates to Maxzone_Principal i for a high signal-to-noise ratio and Maxzone i for a low signal-to-noise ratio.

The comparison can be performed over several images and the detection can depend on a reliability criterion dependent on the number of identical detections for the various images. The reliability criterion can also be dependent on the number of identical detections for the various zones.

The main advantage of the invention is reliable detection of the black bands and hence of the "letterbox" formats even if the information-carrying video, that is to say the video lines outside of the black bands, is much the same as the levels of the black. The displaying of a logo in a black band does not impede such detection owing to the fact that the detection can be performed for vertical zones so as to detect or eliminate the effects of the small insets present in the black bands.

The characteristics and advantages of the invention will become better apparent from the following description given by way of example and with reference to the appended figures in which:
- Figure 1 represents an image in the letterbox format,
- Figure 2a represents a histogram corresponding to a homogeneous black level,
- Figure 2b represents a histogram corresponding to different levels of black,
- Figure 3a represents an apportioning of the image into zones for the calculation of the histograms,
- Figure 3b represents a histogram corresponding to zone 1,
- Figure 3c represents a histogram corresponding to zones 2 to 4,
- Figure 4a represents a histogram for which the threshold value taken into account is the maximum number of occurrences,
- Figure 4b represents a histogram for which the threshold value taken into account relates to the sum of the first, second and third greatest occurrences.

Figure la represents a video image in the 4/3 format comprising an upper black band and a lower black band and displayed on a 16/9 screen. The right- and left-hand sides of the screen are filled in with vertical black bars. In an exemplary use of the process, an automatic zoom is triggered by the detection of the horizontal bars so as to display a full-screen image.

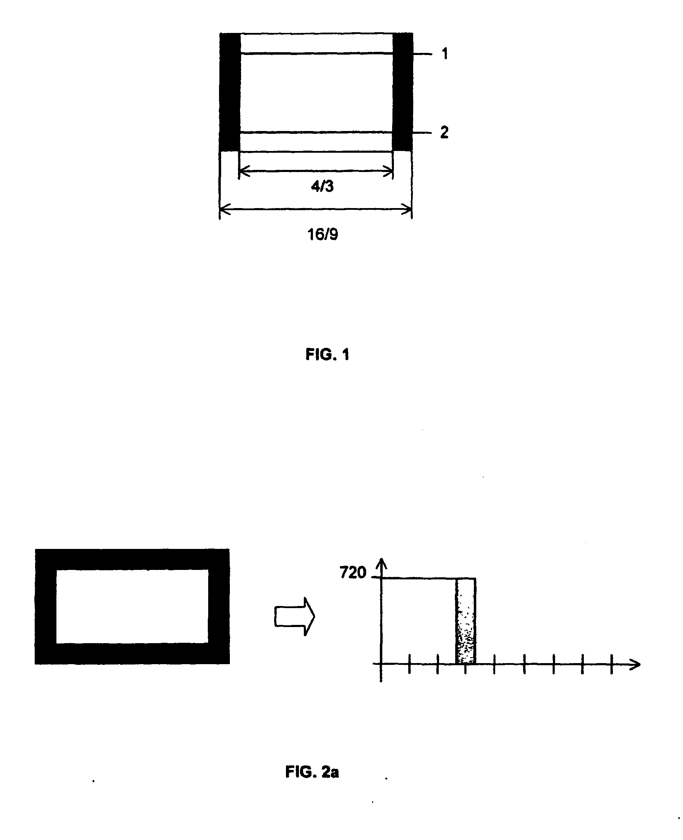

The detection of the black bands amounts in fact to determining in the image the first and the last line of information-carrying video which will subsequently be referred to as the "active" video. The first line of the "active" video, in Figure 1, is referenced 1 and the last line is referenced 2.

The principle of the algorithm implemented within the invention relies on the comparing of a value corresponding to the maximum number of pixels having the same luminance value in the low levels, over a video line, with a threshold dependent on the quality of the image to be processed.

A criterion defining the quality of the image is therefore evaluated as a function of the noise level within the image and also depending on the apportionment per line of the video points over a luminance histogram for the low levels, for example those below 63. The "purer" the black, the larger the value of the maximum of the histogram will be.

Figure 2a represents a histogram corresponding to horizontal black bands having a homogeneous black level.

The labelling used for the histogram corresponds, for the ordinate axis, to the number of occurrences, that is to say to the number of samples and for the abscissa axis, to the luminance values. In the case considered, the 720 samples corresponding to a video line have the same luminance value.

The histograms are described hereinbelow, with the same labelling.

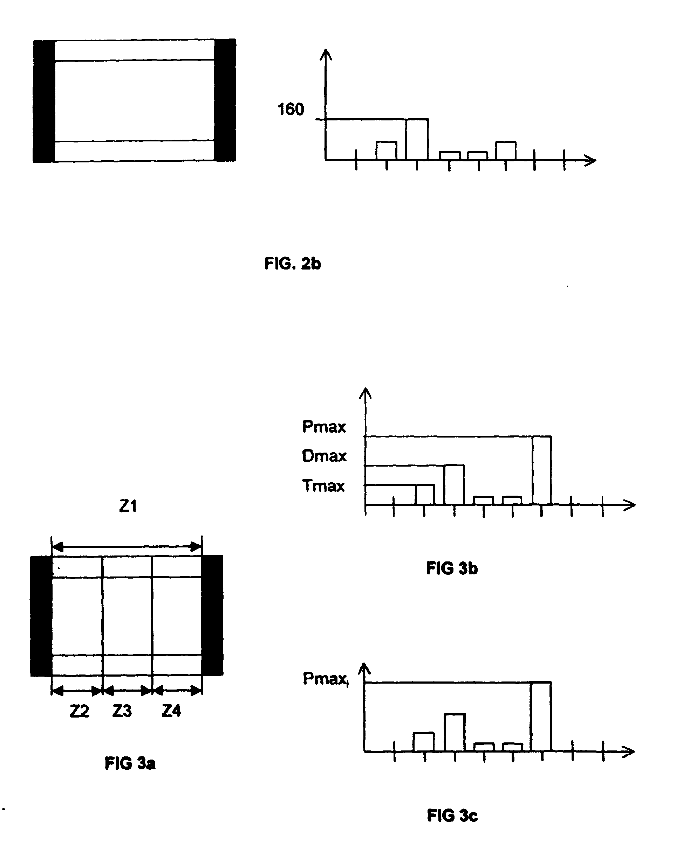

Figure 2b represents a histogram corresponding to different levels of black.

The most frequent luminance level, in the example illustrated, appears for 160 samples out of the 720 samples of a line. This is the first maximum peak over a line of samples.

For reliability of detection reasons, and so as to take account of insets or logos displayed or of any type of display in zones defined in the black bands, the characterization of the image is carried out over several zones, in our example over four zones.

Figure 3a represents such zones:
- a first zone Z1 corresponding to the width of a line of the image in the 4/3 format, i.e. 720 points,
- a second, third and fourth zone Z2, Z3, Z4 corresponding to the first third, to the second third and to the third third of a video line, i.e. 240 points for each zone.

Figure 3b represents a histogram corresponding to zone 1. The values Pmax, Dmax and Tmax are respectively the first, second and third maxima relating to the number of samples per luminance value. They therefore correspond to the three values of low luminance, below 63 in our example, which are most commonly encountered in a line.

The characteristic values chosen for zone 1 are, for each line, the maximum number of identical luminance values Pmax and the sum of the values Pmax, Dmax and Tmax.

Figure 3c represents a histogram corresponding to zone 2, 3 or 4. For these zones, the characteristic value chosen is the value Pmaxᵢ. This is therefore the maximum occurrence for the line portion corresponding to zone i.

The various characteristic values are extracted per video line and therefore yield histograms corresponding to 720 samples for zone 1 and 240 samples for each of the other zones.

The quality criteria chosen correspond to the average values of these measured characteristic values, for an image or a frame, over a part of the image situated in the usual location of a black band of the image.

This is for example an average over the first n video lines displayed. In a particular example, n = 16. By way of comparison, a black band corresponds to several tens of video lines.

In what follows, the generic term image will be used to designate both an image and an frame.

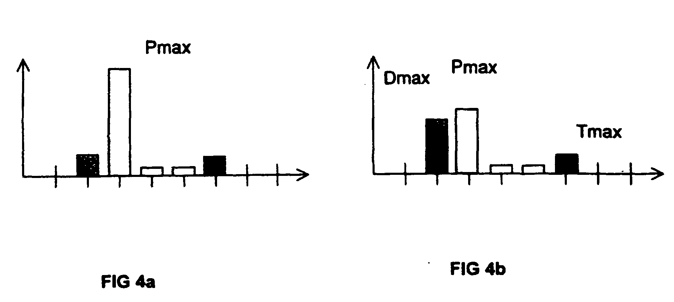

One therefore has the following five quality criteria:
- Noise level calculated in a known manner for an image or a set of images or else precalculated, for example if the image transmission conditions do not influence its value.
- Average value, over the set of n lines of each of the zones i, of the value Pmaxᵢ, this giving four values called Maxzone_Principalᵢ for the four zones i.
- Average value, over the set of n lines of each of the zones i, of the sum Pmax + Dmax + Tmax, this giving four values called Maxzoneᵢ for the four zones i.
   These quality criteria, which therefore relate to the purity of the black, are evaluated for an image.
   Thresholds are then defined for each of these criteria for detecting the black bands. It is the values of the quality criteria which are obtained for the first n lines of the image which are utilized for calculating the thresholds and for detecting the "active" video in the subsequent lines.
   The threshold values calculated depend on the signal-to-noise ratio. For a noise-free image (signal-to-noise ratio S/B ≥ 30 dB), a first test is performed on the value Maxzone₁.
   If this value is greater than 480 evidencing good purity of the black, the threshold chosen for zone i (*Val_Pureᵢ*) is the value Maxzone_Principalᵢ, lowered by a margin of the order of 12%. Figure 4a shows such an example.
   If this value is less than or equal to 480, the threshold value chosen for zone i (*Val_Thresholdᵢ*) is the value Maxzoneᵢ, lowered by a margin of 25% if Maxzone_Principal₁ is less than or equal to 240 or else lowered by a margin of 18% if Maxzone_Principal₁ is greater than 240 and therefore corresponds to a greater purity of black. Figure 4b shows an example where the threshold is calculated with respect to Maxzoneᵢ.
   The better the quality of the image, the smaller the margins.
   Minimum threshold values are imposed, 270 for zone 1 and 270/3 for the other zones, when the calculated threshold values are lower than these floor values.
   The above exemplary algorithm is repeated hereinbelow, supplemented for the other values of signal-to-noise ratio (slightly noisy image and very noisy image). It will be observed that, in the case of a very noisy image, the floor threshold values are higher so as to maintain good reliability in the detections.
   1) Signal/Noise ≥ 30 dB 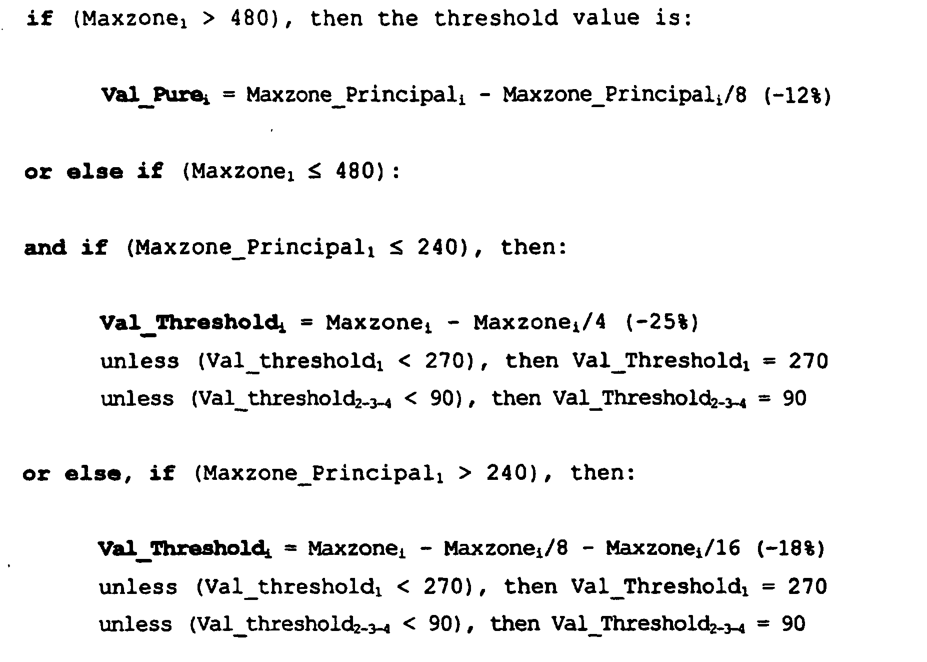
   2) 25 dB ≤ Signal/Noise < 30 dB 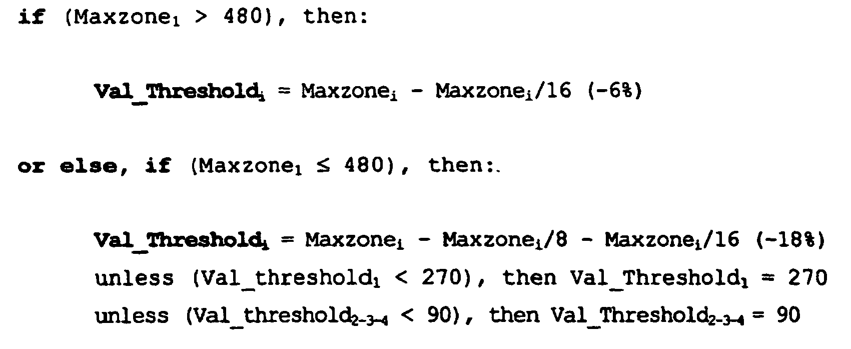
   3) Signal/Noise < 25 dB

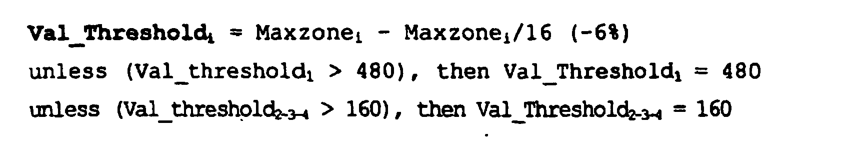

Thus, according to the value of the average, over the first n lines, of the sum of the first three maxima of the histogram, Maxzoneᵢ, and of the value of the noise, the detection is carried out, for each subsequent line j, either by comparing the sum of the first three maxima per line for this line j (Pmaxᵢ+Dmaxᵢ+Tmaxᵢ)ₗᵢₙₑⱼ with the associated threshold (Val_thresholdᵢ), or by comparing the value of the first maximum for this line j (Pmaxᵢ)ₗᵢₙₑⱼ with the associated threshold (Val_pureᵢ).

For an image rated as "pure", the useful information is contained in the value of Pmaxᵢ. The detection with regard to this single value is more accurate.

These comparisons are made for each of the zones and hence by taking the values of the maxima for each part of line j corresponding to a zone.

The altering of the threshold value as a function of the purity of the black makes it possible to be more accurate in the detection. If the image is found to be only slightly noisy, homogeneous, during the measurements over the first few lines, the calculated threshold can be closer to the corresponding calculated average value (that is to say have a small margin). These threshold adjustments, when the quality of the image is declared to be good, allow the detection of insets, logos, etc even if they affect only a very small zone of the image.

The following criteria can be used to confirm or define a line to be "active" video.
- The part of the image in which the line or lines detected as "active video" are situated, for example the first third and the last third of the image. For an image of 288 lines, the detection confirmation zone may be situated for example between line 16 and line 288/3 for the-upper part of the image and line 288 × 2/3 and 288 - 16 for the lower part.
- The number of identical detections over each of the four zones of the same frame.
- The number of samples and the position of the first maximum. (The confidence level is dependent on the magnitude of the peak and on the value of the black).

A time criterion can be added. The 4 values detected, corresponding to the 4 zones, plus the value chosen, are stored in memory for each frame, over p frames. A zonewise majority procedure is then performed so as to determine, per zone, the "top" line corresponding to the first line of the image and the "bottom" line corresponding to the last line of the information-carrying image.

The presence of a logo in a zone can thus be detected with great reliability.

A higher weighting is given to the spatial or temporal criterion depending on the type of detection desired, that is to say depending on whether one wishes to ignore the logo or not, preserve the black bands or not in the presence of a logo, etc.

## Claims

1. Process for detecting black bands (1, 2) in a video image, **characterized in that**:
it calculates, for a line or portion of line situated in a location in which a black band can be expected to be found if present in said image, a maximum number of occurrences of points having the same luminance value, within a luminance range corresponding to low luminance values,
- it calculates, for said line or portion of line, a value as a function of the maximum number,
- it averages said value over lines in said location, to get an average,
- it calculates a threshold dependent on said average,
- it compares said value calculated for a new line, with said threshold.

2. Process according to Claim 1, **characterized in that** the value calculated as a function of the maximum number of occurrences, for a line, is the maximum number of occurrences (Maxzone_Principal i) of the points of the complete line or of a line portion.

3. Process according to Claim 1, **characterized in that** the value calculated as a function of the maximum number of occurrences, for a line, is the sum of the first, second and third greatest occurrences (Maxzone i) of the points of the complete line or of a line portion.

4. Process according to Claim 1, **characterized in that** the threshold is also dependent on the signal-to-noise ratio of the image.

5. Process according to Claim 1, **characterized in that** the threshold is a percentage of the average.

6. Process according to Claim 5, **characterized in that** the percentage is dependent on the value of the average, over these lines, calculated for occurrences corresponding to the points of a complete line (Z1).

7. Process according to Claim 1, **characterized in that** the value calculated as a function of the maximum number of occurrences, for a line, is calculated for all the points of the line (Z1).

8. Process according to Claim 1, **characterized in that** the image is split up into vertical zones (Z2, Z3, Z4), and **in that** the value calculated as a function of the number of occurrences, for a line, is calculated for only those points of the line portion corresponding to this zone.

9. Process according to Claim 8, **characterized in that** the comparison is performed for various zones.

10. Process according to Claim 2, **characterized in that** the threshold relates to the value for a high signal-to-noise ratio.

11. Process according to claim 3, **characterized in that** the threshold relates to the value for a low signal-to-noise ratio.

12. Process according to one of the preceding claims, **characterized in that** the comparison is performed over several images.

13. Process according to Claim 9, **characterized in that** the detection is dependent on a reliability criterion dependent on the number of identical detections for various zones.

14. Process according to Claim 12, **characterized in that** the detection is dependent on a reliability criterion dependent on the number of identical detections for the various images.

## Patentansprüche

1. Verfahren zum Detektieren von schwarzen Balken (1, 2) in einem Videobild, **dadurch gekennzeichnet, dass**:
- es für eine Zeile oder einen Zeilenanteil, der sich an einer Stelle befindet, wo damit gerechnet werden kann, einen schwarzen Balken vorzufinden, falls er in dem Bild vorhanden ist, eine maximale Anzahl von Vorkommnissen von Punkten, die denselben Leuchtdichtewert aufweisen, innerhalb eines Leuchtdichtebereiches berechnet, der niedrigen Leuchtdichtewerten entspricht,
- es für die Zeile oder den Zeilenanteil einen Wert als Funktion der maximalen Anzahl berechnet,
- es den Wert über Zeilen an der Stelle mittelt, um einen Durchschnitt zu erhalten,
- es abhängig von dem Durchschnitt einen Schwellenwert berechnet,
- es den für eine neue Zeile berechneten Wert mit dem Schwellenwert vergleicht.

2. Verfahren nach Anspruch 1, **dadurch gekennzeichnet, dass** der als Funktion der maximalen Anzahl von Vorkommnissen, für eine Zeile, berechnete Wert die maximale Anzahl von Vorkommnissen (Maxzone_Principal i) der Punkte von der vollständigen Zeile oder von einem Zeilenanteil ist.

3. Verfahren nach Anspruch 1, **dadurch gekennzeichnet, dass** der als Funktion der maximalen Anzahl von Vorkommnissen, für eine Zeile, berechnete Wert die Summe der häufigsten, zweit- und dritthäufigsten Vorkommnisse (Maxzone i) der Punkte von der vollständigen Zeile oder von einem Zeilenanteil ist.

4. Verfahren nach Anspruch 1, **dadurch gekennzeichnet, dass** der Schwellenwert auch von dem Signal-Rausch-Verhältnis des Bildes abhängig ist.

5. Verfahren nach Anspruch 1, **dadurch gekennzeichnet, dass** der Schwellenwert ein Prozentsatz des Durchschnitts ist.

6. Verfahren nach Anspruch 5, **dadurch gekennzeichnet, dass** der Prozentsatz von dem Wert des Durchschnitts, über diese Zeilen, abhängig ist, der für Vorkommnisse berechnet wird, die den Punkten einer vollständigen Zeile (Z1) entsprechen.

7. Verfahren nach Anspruch 1, **dadurch gekennzeichnet, dass** der als Funktion der maximalen Anzahl von Vorkommnissen, für eine Zeile, berechnete Wert für alle Punkte der Zeile (Z1) berechnet wird.

8. Verfahren nach Anspruch 1, **dadurch gekennzeichnet, dass** das Bild in vertikale Bereiche (Z2, Z3, Z4) aufgeteilt ist, und dass der als Funktion der Anzahl von Vorkommnissen, für eine Zeile, berechnete Wert nur für jene Punkte des Zeilenanteils berechnet wird, der diesem Bereich entspricht.

9. Verfahren nach Anspruch 8, **dadurch gekennzeichnet, dass** der Vergleich für unterschiedliche Bereiche durchgeführt wird.

10. Verfahren nach Anspruch 2, **dadurch gekennzeichnet, dass** sich der Schwellenwert auf den Wert für ein hohes Signal-Rausch-Verhältnis bezieht.

11. Verfahren nach Anspruch 3, **dadurch gekennzeichnet, dass** sich der Schwellenwert auf den Wert für ein niedriges Signal-Rausch-Verhältnis bezieht.

12. Verfahren nach einem der vorhergehenden Ansprüche, **dadurch gekennzeichnet, dass** der Vergleich über mehrere Bilder durchgeführt wird.

13. Verfahren nach Anspruch 9, **dadurch gekennzeichnet, dass** die Detektierung von einem Zuverlässigkeitskriterium abhängig ist, das von der Anzahl von identischen Detektierungen für unterschiedliche Bereiche abhängig ist.

14. Verfahren nach Anspruch 12, **dadurch gekennzeichnet, dass** die Detektierung von einem Zuverlässigkeitskriterium abhängig ist, das von der Anzahl von identischen Detektierungen für die unterschiedlichen Bilder abhängig ist.

## Revendications

1. Procédé de détection de bandes noires (1, 2) dans une image vidéo, **caractérisé en ce que** :
- il calcule, pour une ligne ou portion de ligne se trouvant dans l'emplacement habituel d'une bande noire lorsque présente dans la dite image, un nombre maximum d'occurrences de points ayant la même valeur de luminance, dans une plage de luminance correspondant à de faibles valeurs de luminance,
- il calcule, pour la dite ligne ou portion de ligne, une valeur fonction du nombre maximum,
- il effectue la moyenne de cette valeur sur les lignes du dit emplacement, pour obtenir une valeur moyenne,
- il calcule un seuil fonction de la dite valeur moyenne,
- il compare la dite valeur calculée pour une nouvelle ligne, avec le dit seuil.

2. Procédé selon la revendication 1, **caractérisé en ce que** la valeur calculée en fonction du nombre maximum d'occurrences, pour une ligne, est le nombre maximum d'occurrences (Maxzone_Principal i) des points de la ligne complète ou d'une portion de ligne.

3. Procédé selon la revendication 1, **caractérisé en ce que** la valeur calculée en fonction du nombre maximum d'occurrences, pour une ligne, est la somme des premier, deuxième et troisième plus fortes occurrences (Maxzone i) des points de la ligne complète ou d'une portion de ligne.

4. Procédé selon la revendication 1, **caractérisé en ce que** le seuil est également fonction du rapport signal à bruit de l'image.

5. Procédé selon la revendication 1, **caractérisé en ce que** le seuil est un pourcentage de la moyenne.

6. Procédé selon la revendication 5, **caractérisé en ce que** le pourcentage est fonction de la valeur de la moyenne, sur ces lignes, calculée pour des occurrences correspondant aux points d'une ligne complète (Z1).

7. Procédé selon la revendication 1, **caractérisé en ce que** la valeur calculée en fonction du nombre maximum d'occurrences, pour une ligne, est calculée pour tous les points de la ligne (Z1).

8. Procédé selon la revendication 1, **caractérisé en ce que** l'image est découpée en zones verticales (Z2, Z3, Z4), et **en ce que** la valeur calculée en fonction du nombre d'occurrences, pour une ligne, est calculée pour les seuls points de la portion de ligne correspondant à cette zone.

9. Procédé selon la revendication 8, **caractérisé en ce que** la comparaison est effectuée pour différentes zones.

10. Procédé selon la revendication 2, **caractérisé en ce que** le seuil est relatif à la valeur Maxzone_Principal i pour un rapport signal à bruit élevé.

11. Procédé selon la revendication 2, **caractérisé en ce que** le seuil est relatif à la valeur Maxzone i pour un rapport signal à bruit faible.

12. Procédé selon l'une des revendications précédentes, **caractérisé en ce que** la comparaison est effectuée sur plusieurs images.

13. Procédé selon la revendication 9, **caractérisé en ce que** la détection est fonction d'un critère de fiabilité fonction du nombre de détection identiques pour les différentes zones.

14. Procédé selon la revendication 12, **caractérisé en ce que** la détection est fonction d'un critère de fiabilité fonction du nombre de détection identiques pour les différentes images.
